# EUROPÄISCHE PATENTSCHRIFT

(11) **EP 3 239 576 B1**
(45) Veröffentlichungstag und Bekanntmachung des Hinweises auf die Patenterteilung: **23.01.2019**
(21) Anmeldenummer: 17152635.3
(22) Anmeldetag: 23.01.2017
(51) Int. Cl.: F16L 3/12, F16L 3/10, F16L 3/127, F16L 3/133, F16L 3/137, H01Q 1/12, H01Q 13/20, H02G 3/32, E21F 17/02

(54) **HALTEVORRICHTUNG FÜR EIN KABEL ODER ROHR**
RETAINING DEVICE FOR A CABLE OR TUBE
DISPOSITIF DE RETENUE POUR UN CÂBLE OU UN TUYAU

(30) Priorität: 27.04.2016 AT 503742016
(43) Veröffentlichungstag der Anmeldung: 01.11.2017
(73) Patentinhaber: EFCO Befestigungstechnik AG, 8606 Nänikon (CH)
(72) Erfinder: DOPPELBAUER, Thomas, 6800 Feldkirch (AT)
(74) Vertreter: Torggler & Hofinger Patentanwälte

(56) Entgegenhaltungen:
- EP-A1- 1 180 838
- WO-A2-2016/096149
- CN-U- 204 254 053
- DE-A1- 19 742 076
- DE-U1- 9 015 364
- US-A1- 2007 205 335
- US-B1- 7 407 138

## Beschreibung

Die Erfindung betrifft eine Haltevorrichtung für ein Kabel oder Rohr mit den Merkmalen des Oberbegriffs des Anspruchs 1.

Bei bekannten Haltevorrichtungen ist die Befestigungsvorrichtung für das Kabel oder Rohr als Schelle ausgebildet und zentral am Haltefuß angeordnet. Dies erschwert die Zugänglichkeit des Haltefußes und damit die Montage des Haltefußes am Untergrund.

Bei einer gattungsgemäßen Haltevorrichtung ist ein am Haltefuß angeordneten Ständer vorgesehen, welcher die Befestigungsvorrichtung zur Befestigung des Kabels oder Rohres vom Haltefuß mit einem korrekten Abstand beabstandet, sodass der Abstand nicht vom Monteur gewählt werden muss. Es sind gattungsgemäße Haltevorrichtungen bekannt, bei welchen die Befestigungsvorrichtung für das Kabel oder Rohr einen am Ständer angeordneter Haken aufweist, an welchem das Kabel oder Rohr mittels eines Befestigungsbands (nach Art eines Kabelbinders) unter Einsatz eines geeigneten Werkzeugs befestigt wird. Weil die Befestigungsvorrichtung den Haltefuß verdeckt, weist der Haken eine Durchtrittsöffnung auf, die den Durchtritt eines Werkzeugs zum Festziehen eines den Haltefuß mit dem Untergrund verbindenden Befestigungsmittels gestattet. Bei in die Durchtrittsöffnung eingeführtem Setzwerkzeug ist keine Sicht normal auf den Haltefuß möglich, was eine Kontrolle erschwert. Außerdem muss das Setzwerkzeug nach dem Einfädeln in die Durchtrittsöffnung korrekt ausgerichtet werden um das Befestigungsmittel zu kontaktieren, was ohne direkte Sicht nur unter Mühen möglich ist.

Aus der CN 204 254 053 U ist eine Haltevorrichtung bekannt, welche einen am seitlichen Randbereich des Haltefußes angeordneten Ständer aufweist, der eine zumindest teilweise Zugänglichkeit zu einem Haltefuß ermöglicht.

Die EP 1 180 838 A1 zeigt ebenfalls eine Haltevorrichtung, welche einen wie in obiger Schrift ausgebildeten Ständer aufweist.

Auch aus der zwischen Prioritäts- und Anmeldedatum veröffentlichten WO 2016/096149 A2 geht eine Haltevorrichtung mit einem solchen Ständer hervor.

Aufgabe der Erfindung ist die Bereitstellung einer gattungsgemäßen Haltevorrichtung bei welcher die oben diskutierten Probleme vermieden werden.

Diese Aufgabe wird durch eine Haltevorrichtung mit den Merkmalen des Anspruchs 1 gelöst. Vorteilhafte Ausführungsformen der Erfindung sind in den abhängigen Ansprüchen definiert.

Der Ständer ist an einem seitlichen Randbereich des Haltefußes angeordnet, so dass die von der Montageseite abgewandte Seite des Haltefußes neben dem Ständer in einer Richtung normal auf die von der Montageseite abgewandte Seite wenigstens teilweise zugänglich ist. Die Zugänglichkeit ist wenigstens in jenem Bereich der von der Montageseite abgewandte Seite vorzusehen, über welchen die Montage der Haltevorrichtung an einem Untergrund erfolgen soll. In diesem Bereich kann wenigstens eine Befestigungsöffnung für den Durchtritt eines im Untergrund zu verankerndem Befestigungsmittels durch den Haltefuß vorgesehen sein. Alternativ kann vorgesehen sein, den Haltefuß mit dem Befestigungsmittel bei der Montage zu durchstoßen. Anders als beim Stand der Technik muss der Ständer keine Durchtrittsöffnung aufweisen, die den Durchtritt eines Setzwerkzeugs zum Setzen eines den Haltefuß mit dem Untergrund verbindenden Befestigungsmittels gestattet, was die Stabilität des Ständers verbessert.

Vorzugsweise ist die Haltevorrichtung - abgesehen vom ggf. vorhandenen nicht-brennbaren Sicherheitsband und Befestigungsmitteln - einstückig ausgebildet.

Vorzugsweise besteht die Haltevorrichtung - abgesehen vom ggf. vorhandenen nicht-brennbaren Sicherheitsband und Befestigungsmitteln - aus einem elektrisch isolierendem Material.

Vorzugsweise besteht die Haltevorrichtung - abgesehen vom ggf. vorhandenen nicht-brennbaren Sicherheitsband und Befestigungsmitteln - aus einem (vorzugsweise elektrisch isolierendem) Kunststoff.

Die Haltevorrichtung ist bevorzugt mit dem Sicherungsband vorkonfektioniert. Ausführungsbeispiele der Erfindung werden anhand der Figuren diskutiert. Es zeigen:
- Fig. 1: eine isometrische Ansicht eines ersten nicht unter Anspruch 1 fallenden Ausführungsbeispiels
- Fig. 2: eine weitere isometrische Ansicht zur Fig. 1
- Fig. 3: eine weitere isometrische Ansicht zur Fig. 1
- Fig. 4: eine Seitenansicht zur Fig. 1
- Fig. 5: eine Ansicht zur Fig. 1 in einer Richtung normal auf die von der Montageseite abgewandte Seite des Montagefußes
- Fig. 6a-c: verschiedene Ansichten zu einem zweiten nicht unter Anspruch 1 fallenden Ausführungsbeispiel
- Fig. 7: eine weitere isometrische Ansicht zur Fig. 1
- Fig. 8a-e: ein Ausführungsbeispiel eines nicht-brennbaren Sicherungsbandes

- Fig. 9: eine isometrische Ansicht eines dritten erfindungsgemäßen Ausführungsbeispiels
- Fig. 10: eine isometrische Ansicht eines vierten Ausführungsbeispiels
- Fig. 11: eine weitere isometrische Ansicht zur Fig. 10
- Fig. 12: eine Rückansicht zur Fig. 10
- Fig. 13: eine Ansicht zur Fig. 10 in einer Richtung annähernd normal auf die von der Montageseite abgewandte Seite des Montagefußes
- Fig. 14: eine weitere isometrische Ansicht zur Fig. 10
- Fig. 15: eine weitere isometrische Ansicht zur Fig. 10
- Fig. 16: eine weitere isometrische Ansicht zur Fig. 10 mit eingesetztem Sicherungsband
- Fig. 17: eine weitere isometrische Ansicht zur Fig. 16

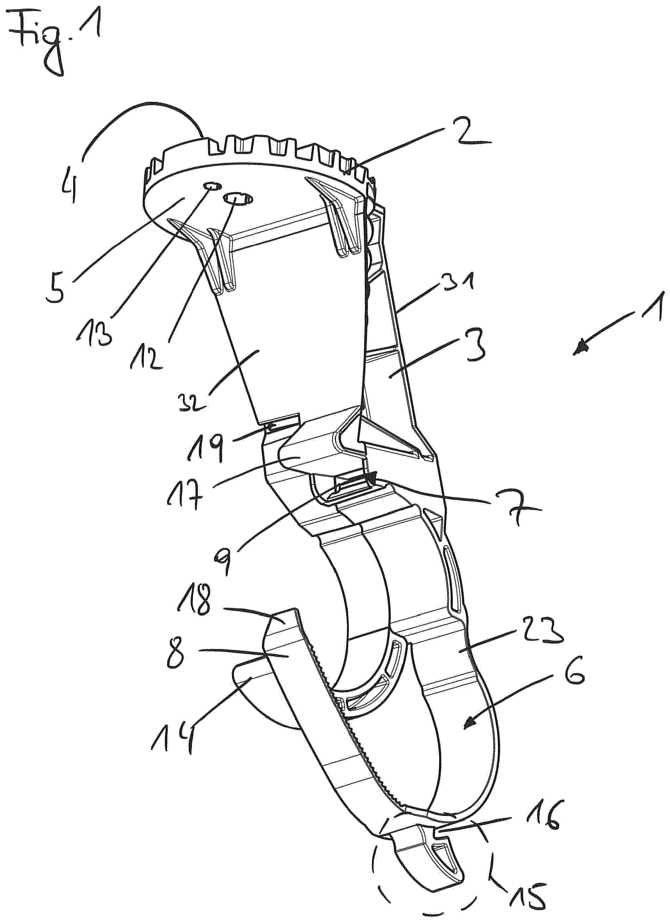

Fig. 1 zeigt ein erstes nicht unter Anspruch 1 fallendes Ausführungsbeispiel einer Haltevorrichtung 1 für ein Kabel oder Rohr, bevorzugt für ein sogenanntes Strahlkabel (Strahlkabel sind elektrische Leckwellenleiter, die als langgestreckte Antennen verwendet werden).

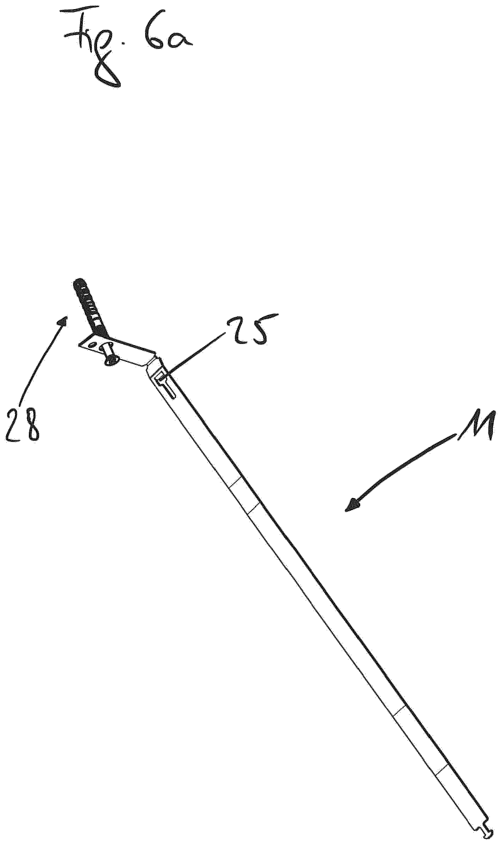

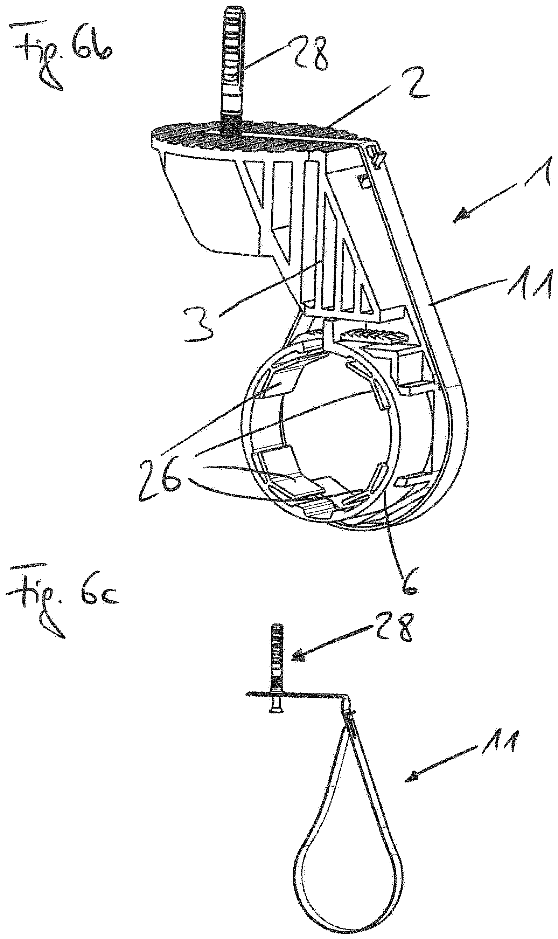

Die Haltevorrichtung 1 weist einen Haltefuß 2 zur Montage der Haltevorrichtung 1 an einem Untergrund (z. B. Kabeltrasse, Decke oder Wand eines Bauwerkes - vorzugsweise eines Tunnels oder Schachts, usw.) auf. Die Montage erfolgt mit der Montageseite 4 des Haltefuß 2, z. B. indem in die erste und/oder zweite Befestigungsöffnung 12, 13 ein Befestigungsmittel 28 (vgl. z. B. Fig. 6) eingesetzt und mit dem Untergrund verbunden wird. Beispiele für Befestigungsmittel 28 sind Schrauben, Dübel (insbesondere Metalldübel), Nägel.

Es ist eine Befestigungsvorrichtung zur Befestigung des Kabels oder Rohres am Haltefuß 2 vorgesehen, wobei die Befestigungsvorrichtung an einer von der Montageseite 4 abgewandten Seite 5 des Haltefußes 2 angeordnet ist.

Die Befestigungsvorrichtung weist einen mit dem Haltefuß 2 verbundenen Ständer 3 auf, welcher an einem seitlichen Randbereich des Haltefußes 2 angeordnet ist, sodass die von der Montageseite 4 abgewandte Seite 5 in einer Richtung normal auf die Seite 5 wenigstens teilweise zugänglich ist. Dies erleichtert die Montage der Haltevorrichtung 1 am Untergrund, das gewählte Befestigungsmittel 28 kann ohne weitere Maßnahmen (insbesondere ohne den Einsatz von Adaptern) direkt in die erste und/oder zweite Befestigungsöffnung 12, 13 eingesetzt und mit einem geeigneten Setzwerkzeug (z. B. Hammer, Schrauber, luft- oder pulvergetriebene Werkzeuge) mit dem Untergrund verbunden werden kann. Das Setzwerkzeug hat neben dem Ständer 3 Platz. Der Ständer 3 definiert einen festen Abstand von der Befestigungsvorrichtung für das Kabel oder Rohr zum Montagefuß 2. Natürlich kann der Abstand des Kabels oder Rohres zum Untergrund durch den Einsatz von Abstandhaltern, die zwischen Montagefuß 2 und Untergrund angeordnet werden (vorzugsweise mit der Montageseite 4 des Montagefußes 2 verbunden) vergrößert werden. Zur korrekten Positionierung solcher Abstandhalter kann der Montagefuß 2 wenigstens eine Aufnahme 21 für wenigstens einen am Abstandhalter angeordneten Positionierzapfen aufweisen.

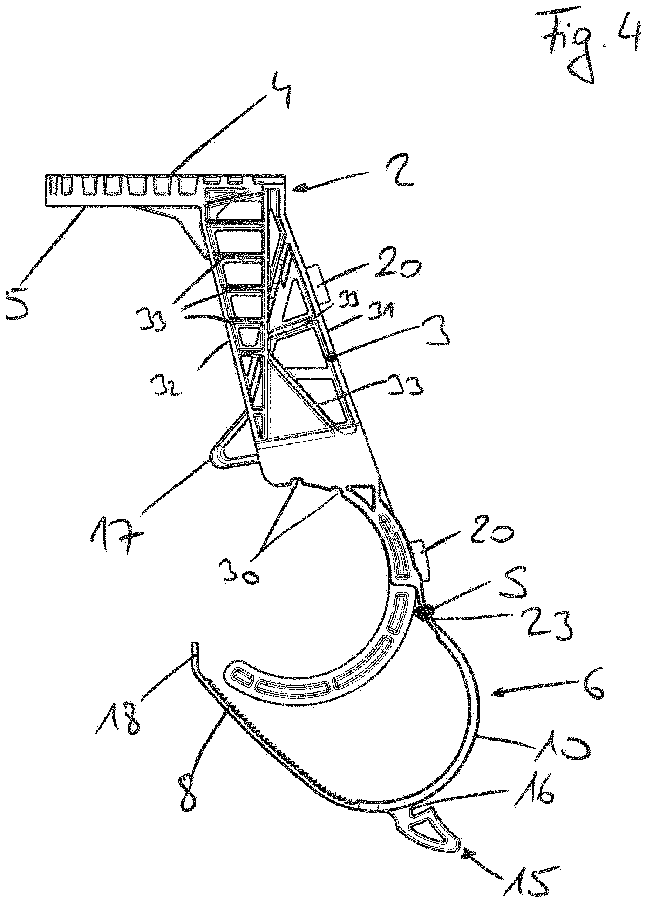

Wie in Fig. 4 gut ersichtlich, kann der Ständer 3 nach Art eines Fachwerkes ausgebildet sein. So erreicht man mit geringem Materialeinsatz eine ausreichende Steifigkeit um die Tragkraft der Haltevorrichtung 1 zu gewährleisten. Der Ständer 3 kann aber elastisch genug ausgebildet sein, um sich beispielsweise bei Druckstößen (diese können z. B. durch einen einen Tunnel durchquerenden Zug entstehen) über seine gesamte Länge elastisch verformen zu können und anschließend wieder in die Ausgangslage zurückkehren zu können. So kann der Haltefuß 2 und ein den Haltefuß 2 mit dem Untergrund verbindendes Befestigungsmittel 28 vor dynamischen Kräften weitgehend geschützt werden. Punktuelle Belastungsspitzen der Haltevorrichtung 1 - vor allem im Bereich der Befestigungsvorrichtung für das Kabel oder Rohr und im Bereich der Befestigungsmittel 28 - wie sie aus dem Stand der Technik bekannt sind, können so vermieden werden, da die dynamischen Kräfte zumindest teilweise bereits im Ständer 3 aufgenommen werden. Das Fachwerk bildet ein Feder-Dämpfer-System. Der Ständer 3 weist zwei Längsstreben 31, 32 auf, die den Montagefuß 2 mit der Befestigungsvorrichtung verbinden. Zwischen diesen Längsstreben 31, 32 verlaufen mehrere Querstreben 33.

Ein weiterer Vorteil der Zugänglichkeit der von der Montageseite 4 abgewandte Seite 5 des Haltefußes 2 ist die Möglichkeit einer Kontrolle der sicheren Montage (z. B. Sichtkontrolle, Kontrolle mittels eines Drehmomentschlüssels usw.) und die Möglichkeit einer allfällig erforderlichen Nachbesserung der Montage. Die leichte Zugänglichkeit der Seite 5 des Haltefußes 2 bietet auch Vorteile für eine möglicherweise erforderliche Demontage des Kabels oder Rohres vom Untergrund, ohne die Notwendigkeit das Kabel oder Rohr von der Befestigungsvorrichtung zur Befestigung des Kabels oder Rohres am Haltefuß 2 lösen zu müssen.

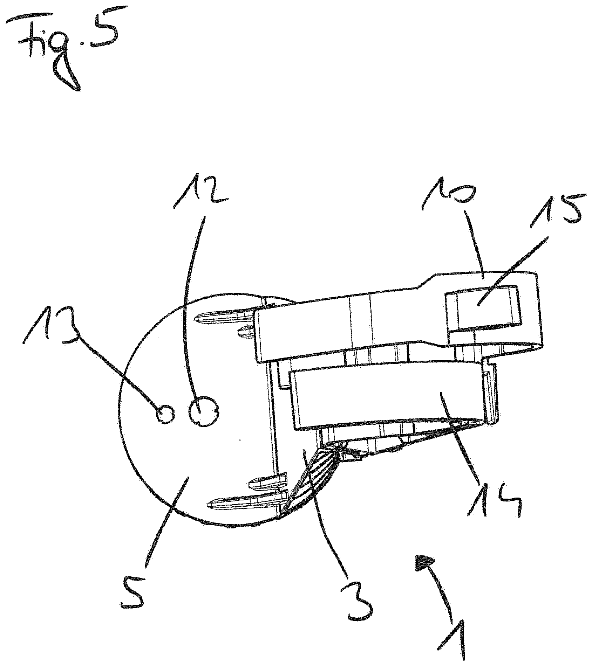

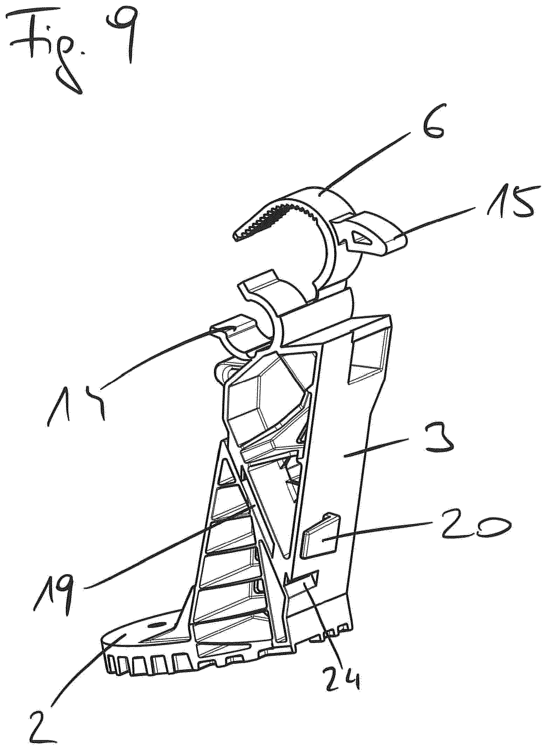

Ist die Haltevorrichtung 1 am Untergrund montiert, kann das Kabel oder Rohr mittels der Vorfixierung 14 an der Haltevorrichtung 1 vorpositioniert werden. Das Kabel oder Rohr wird in die hier hakenförmige Vorfixierung 14 eingelegt und kann anschließend axial und/oder radial ausgerichtet werden. Anders als in den Fig. 1 bis 5 dargestellt ist die Vorfixierung 14 gemäß der Erfindung wie in Fig. 9 gezeigt in Form von Federklammern ausgebildet. In der Ausführung der Fig. 9 kann das Kabel oder Rohr zwischen zwischen den Federklammern eingeklemmt und so vorpositioniert werden.

Ist das Kabel wie gewünscht ausgerichtet, kann die Befestigung des Kabels oder Rohr am Haltefuß 2 mittels der Befestigungsvorrichtung erfolgen.

Im gezeigten Ausführungsbeispiel ist dies auf besonders einfache Art und Weise möglich, ggf. sogar werkzeuglos. Zu diesem Zweck weist das Befestigungsband 6 in diesem Ausführungsbeispiel einen bügelförmig ausgebildeten und vom Haltefuß 2 abstehenden Abschnitt 10 auf (vgl. z. B. Fig. 4). Das freie Bandende 8 kann durch Druckausübung auf den bügelförmig ausgebildeten Abschnitt 10 des Befestigungsbandes 6 in die Öffnung 9 des Bandverschlusses 7 eingeführt und durch den Bandverschluss 7 (dieser kann z. B. in Form einer zumindest am freien Bandende 8 angeordneten Verzahnung, welche mit einer in der Öffnung 9 angeordneten Rastnase zusammenwirkt ausgebildet sein) verriegelt werden. Zur Erleichterung des Vorganges ist in diesem Ausführungsbeispiel eine Einführhilfe vorgesehen. Diese weist einen am freien Bandende 8 angeordneten Schnabel 18 auf, der über eine vor der Öffnung 9 angeordnete Rampe 17 in die Öffnung 9 geleitet wird. Die Druckausübung kann z. B. werkzeuglos durch Anlage einer Hand erfolgen. In diesem Ausführungsbeispiel ist eine Spannhilfe 15 vorgesehen, die einen definierten Angriffspunkt zur Verfügung stellt. Dies kann sowohl von Hand (z. B. mittels eines Daumens) oder über ein Werkzeug (z. B. mit einem definierten Drehmoment) erfolgen. Die hier vorgesehene und z. B. in Fig. 4 erkennbare Ausnehmung 16 dient zum Angriff eines gabelförmigen Werkzeugs.

Es ist vorteilhaft, wenn zumindest ein Gelenk 23 (hier als Filmgelenk ausgebildet) vorgesehen ist, welches eine Schwenkachse S für eine Schwenkbewegung des bügelförmig ausgebildeten Abschnitts 10 des Befestigungsbandes 6 bildet. Hier ist das Gelenk 23 zwischen einem am Ständer 3 angeordneten Abschnitt der Befestigungsvorrichtung und dem Befestigungsband 6 angeordnet. Natürlich könnte auch mehr als ein Gelenk 23 vorgesehen sein. Das Gelenk 23 könnte in anderer Form, z. B. als Achszapfgelenk, ausgebildet sein. Es ist nicht unbedingt ein Gelenk 23 erforderlich. Z. B. könnte das Befestigungsband 6 aufgrund seiner vorgegebenen Form bei Druckausübung auf den bügelförmig ausgebildeten Abschnitt 10 eine definierte Bewegung ausführen. Zu diesem Zweck könnte das Befestigungsband 6 auf seiner dem Stützfuß 2 zugewandten Seite eine Vielzahl von nebeneinander angeordneten Stegen aufweisen. Die Stege nähern sich unter Druckausübung maximal bis zur Anlage einander an.

Alternativ zur weiter oben beschriebenen Ausbildung des Bandverschlusses 7 mit einer Verzahnung und einer Rastnase kann z. B. auch eine reibschlüssige Ausbildung des Bandverschlusses 7 vorgesehen sein.

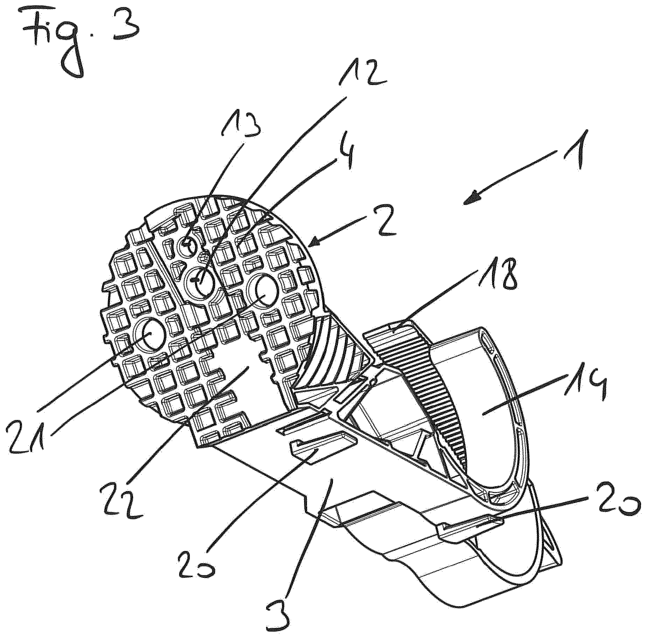

Das Befestigungsband 6 kann Flügel 26 für den Ausgleich unterschiedlicher Durchmesser der Kabel oder Rohre aufweisen (vgl. Fig. 6b). Insbesondere in den Fig. 3, 4 und 7 ist eine bei diesem Ausführungsbeispiel vorgesehene Vorrichtung zum Anbringen eines nicht-brennbaren Sicherungsbands 11 an der Haltevorrichtung 1 (vgl. Fig. 6a, 6b) unabhängig von einer Montage der Haltevorrichtung 1 an einem Untergrund erkennbar. Die Vorrichtung zum Anbringen des Sicherungsbandes 11 ist zusätzlich zur Befestigungsvorrichtung für das Kabel oder Rohr vorgesehen. Das nicht-brennbare Sicherungsband 11 bildet im Brandfall eine Absturzsicherung für das Kabel oder Rohr, welche ein Abstürzen des Kabels oder Rohres auch bei Zerstörung des Haltefußes 2, des Ständers 3 und der Befestigungsvorrichtung verhindert. Die Vorrichtung zum Anbringen des Sicherungsbandes 11 gestattet einen definierten Verlauf des Sicherungsbandes 11 entlang der Haltevorrichtung 1 und erleichtert so eine -vorzugsweise werkzeuglose - Befestigung des Sicherungsbandes 11 an sich selbst.

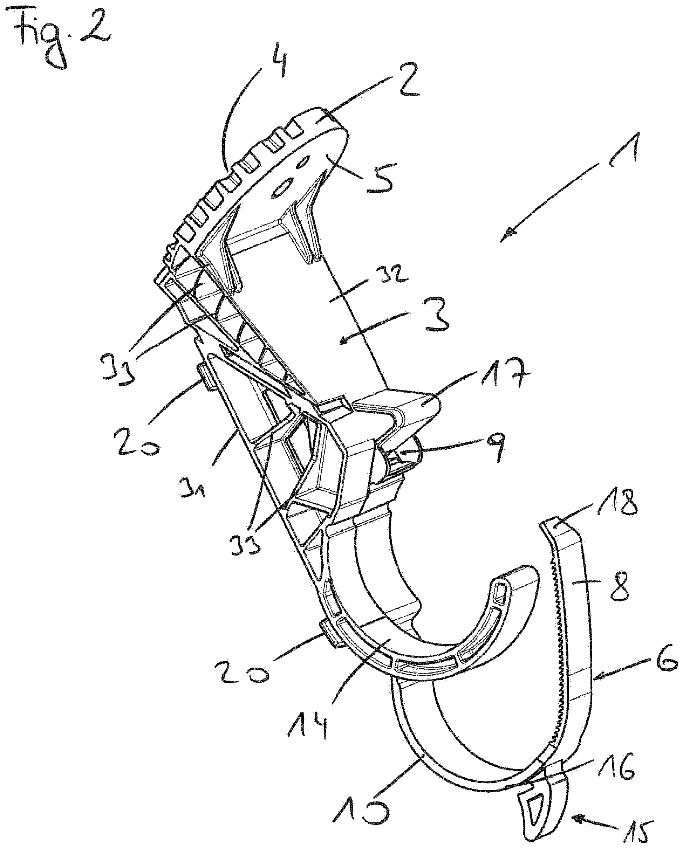

Im gezeigten Ausführungsbeispiel umfasst die Vorrichtung zum Anbringen des Sicherungsbandes 11 zwei Halteklammern 20 (ggf. könnte auch nur eine Halteklammer 20 oder mehr als zwei Halteklammern 20 vorgesehen sein) und eine an der Montageseite 4 des Haltefußes 2 angeordnete Ausnehmung 22 (diese ist nicht unbedingt erforderlich). Weiters ist eine vor allem in Fig.2 erkennbare Führung 19 für das Sicherungsband 11 vorgesehen.

Noch vor der Montage der Haltevorrichtung 1 am Untergrund und vor der Vorfixierung des Kabels oder Rohres wird das Sicherungsband 11 in die Ausnehmung 22 und die Halteklammern 20 eingelegt. Das Sicherungsband 11 ist bereits jetzt relativ zur Haltevorrichtung 1 korrekt ausgerichtet und gehalten.

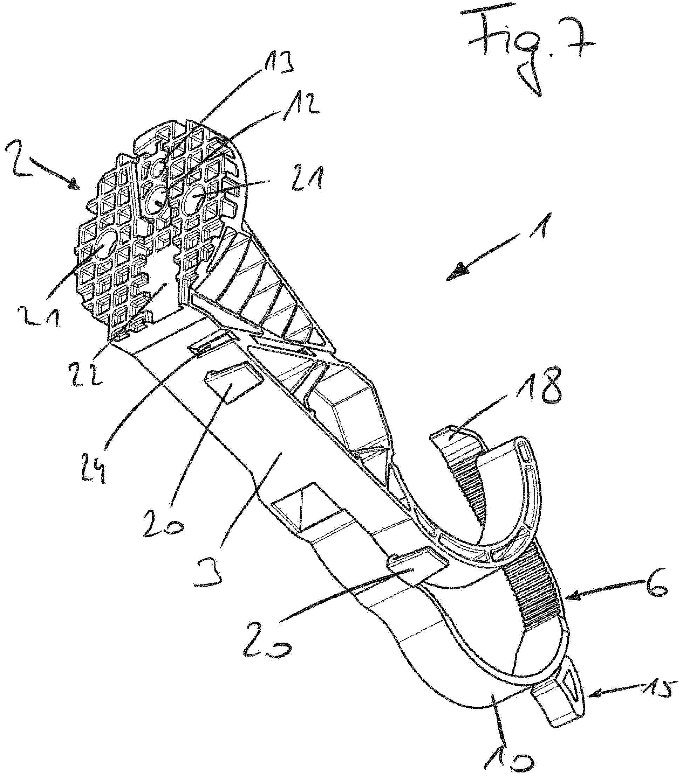

Dann erfolgt die Montage der Haltevorrichtung 1 am Untergrund. Dann erfolgt die Vorfixierung des Kabels oder Rohres. Anschließend wird das Sicherungsband 11 um das Kabel oder Rohr herum geführt, durch die Führung 19 hindurch geführt und tritt an der anderen Seite des Ständers 3 über eine Austrittsöffnung 24 aus (vgl. Fig. 7). Im Bereich der Austrittsöffnung 24 weist das Sicherungsband 11 eine Durchtrittsöffnung 25 auf, sodass das freie Ende des Sicherungsbandes 11 in diesem Bereich mit sich selbst verbunden werden kann. Das Sicherungsband 11 bildet in diesem Zustand eine das Kabel oder Rohr umgebende Schlaufe. Alternativ könnte ein seitliches Einhaken des freien Endes des Sicherungsbandes 11 am Sicherungsband 11 erfolgen. Für die Verbindung weist das freie Ende des Sicherungsbandes 11 in diesem Ausführungsbeispiel eine klauenförmige Ausbildung auf. Die Klauen des freien Endes können das Sicherungsband 11 im Bereich der Durchtrittsöffnung 25 hintergreifen. Eine andere Ausbildung der Verbindung (z. B. Kleben, Vernieten, usw.) wäre denkbar.

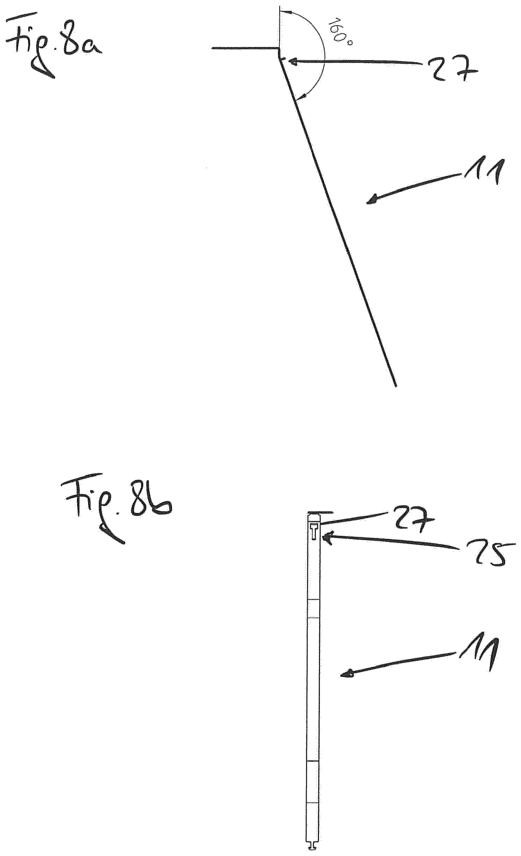

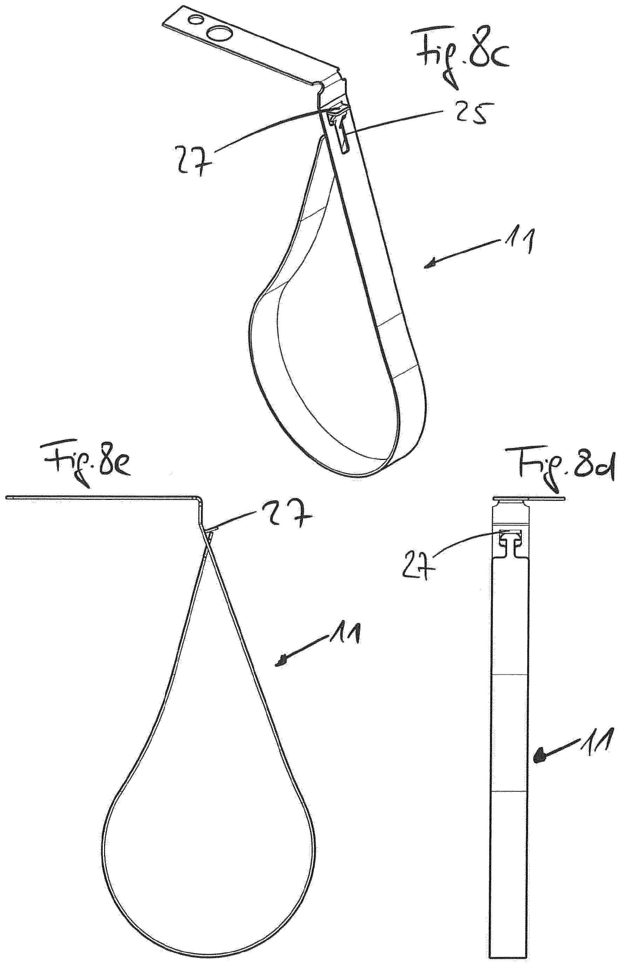

Die Durchtrittsöffnung 25 kann eine Verbreiterung zur Erleichterung des Einführens der Klauen aufweisen, wobei sich an die Verbreiterung ein schlitzförmiger Abschnitt anschließt. Es kann vorgesehen sein, dass die Verbreiterung durch eine umbiegbare Sicherungslasche 27 verschließbar ist, wenn sich die Klaue im schlitzförmigen Abschnitt befindet (vgl. Fig. 8 - dort ist die Sicherungslasche 27 noch nicht umgebogen).

Im gezeigten Ausführungsbeispiel weist das Sicherungsband 11 eine vorgefertigte abgewinkelte Form auf (vgl. Fig. 8).

Es sind Öffnungen (hier am abgewinkelten Schenkel) vorgesehen, die mit am Haltefuß 2 angeordneten ersten und zweiten Befestigungsöffnungen 12, 13 fluchten, für einen Durchtritt der Befestigungsmittel 28.

Will man das Sicherungsband 11 von den Befestigungsmitteln 28 galvanisch trennen, können im Bereich der Öffnungen des Sicherungsbandes 11, welche den Durchtritt der Befestigungsmittel 28 gestatten, Hülsen oder Scheiben aus einem isolierenden Material angeordnet sein. Diese können einstückig mit dem Haltefuß 2 ausgebildet sein. Alternativ können die Hülsen oder Scheiben eingelegt werden.

Das nicht-brennbare Sicherungsband 11 kann - wie an sich bekannt - z. B. aus Metall oder Keramik bestehen.

Ein Ausführungsbeispiel eines nicht-brennbaren Sicherungsbandes 11 ist in Fig. 8 in unterschiedlichen Konfigurationen und Ansichten gezeigt.

Fig. 8a und 8b zeigen ein Sicherungsband 11, wie es dem Monteur vorgefertigt zur Verfügung gestellt wird. Die Fig. 8c, 8d und 8e zeigen in verschiedenen Ansichten das fertig montierte Sicherungsband 11 bei ausgeblendeter Haltevorrichtung 1.

Das Ausführungsbeispiel der Fig. 6 unterscheidet sich von jenem der Fig. 1 dadurch, dass
- das Befestigungsband 6 Flügel 26 für den Ausgleich unterschiedlicher Durchmesser der Kabel oder Rohre aufweist
- die Vorfixierung 14 polygonal ausgebildet ist
- die Vorrichtung zum Anbringen des nicht-brennbaren Sicherungsbands 11 an der Haltevorrichtung 1 drei Halteklammern 20 aufweist
- das nicht-brennbare Sicherungsband 11 an der von der Montageseite 4 abgewandten Seite 5 des Haltefußes 2 befestigt wird

Fig. 6a zeigt nur das Sicherungsband 11 in dieser Stellung bei ausgeblendeter Haltevorrichtung 1. Fig. 6b zeigt die Haltevorrichtung 1 mit in die Halteklammern 20 (aus Gründen der Übersichtlichkeit nicht dargestellt) eingesetztem und am Haltefuß 2 befestigtem Sicherungsband 11, wobei das Sicherungsband 11 durch eine Führung 19 hindurch geführt und an sich selbst befestigt wurde. Fig. 6c zeigt nur das Sicherungsband 11 in dieser Stellung bei ausgeblendeter Haltevorrichtung 1.

Das erfindungsgemäße Ausführungsbeispiel der Fig. 9 unterscheidet sich von jenem der Fig. 1 dadurch, dass
- die Vorrichtung zum Anbringen des nicht-brennbaren Sicherungsbands 11 an der Haltevorrichtung 1 nur eine Halteklammer 20 aufweist
- die Vorfixierung 14 in Form von Federklammern ausgebildet ist

In den gezeigten Ausführungsbeispielen verläuft das Sicherungsband 11 mit einem durch das Material der Haltevorrichtung 1 gebildeten Abstand zum Kabel oder Rohr, was vor allem beim Einsatz eines metallischen Sicherungsbandes 11 und der Ausbildung des Kabels als Strahlkabel vorteilhaft ist, weil so Störungen der Abstrahlung des Strahlkabels durch das metallische Sicherungsband 11 reduziert werden.

Die Befestigungsvorrichtung für das Kabel oder Rohr kann zumindest eine Positioniernut 30 aufweisen, zur lagerichtigen Positionierung des Kabels oder Rohr an der Haltevorrichtung 1, falls das Kabel oder Rohr mit zumindest einer Positionierwulst versehen sind.

Es kann eine Einführhilfe 34 für das Sicherungsband 11 vorgesehen sein.

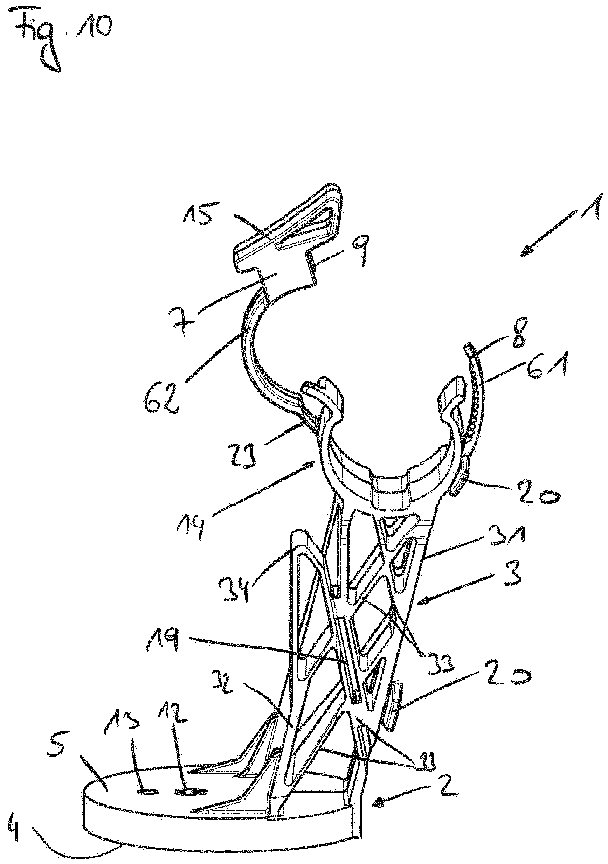

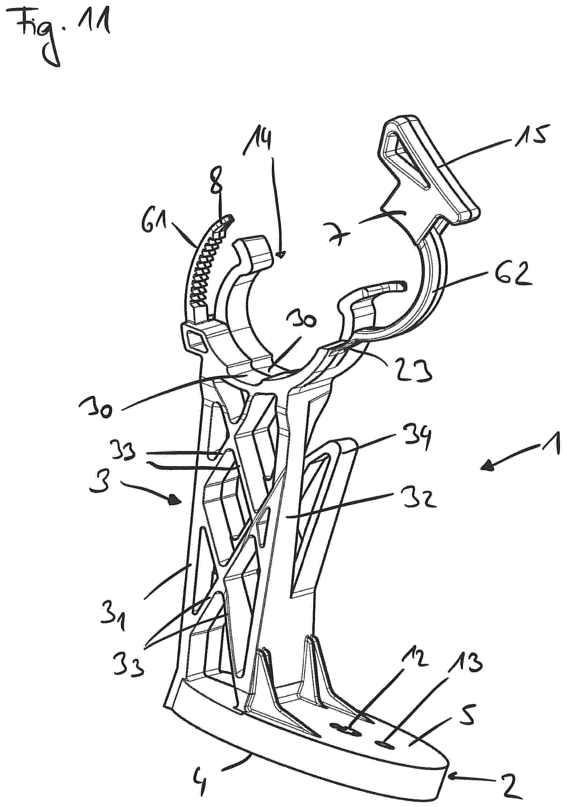

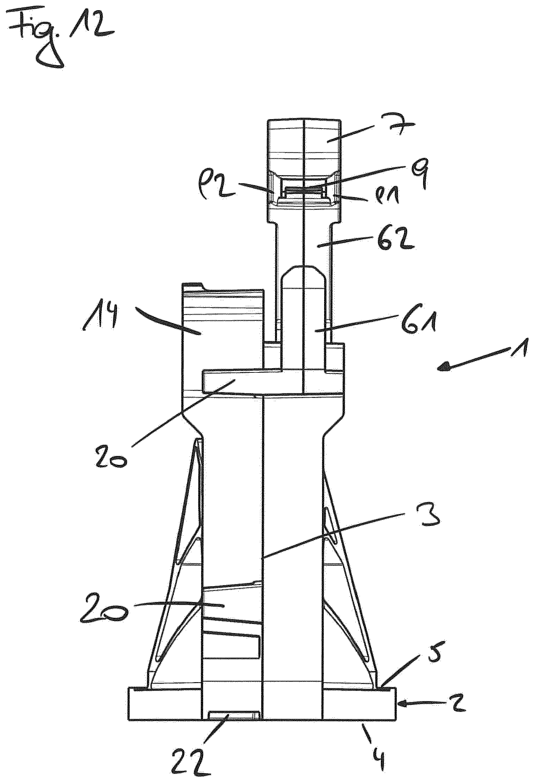

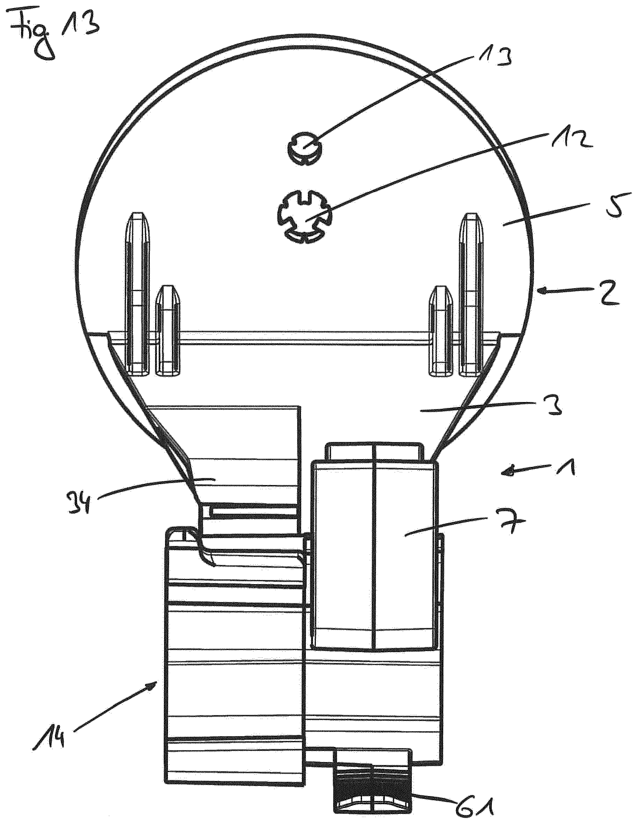

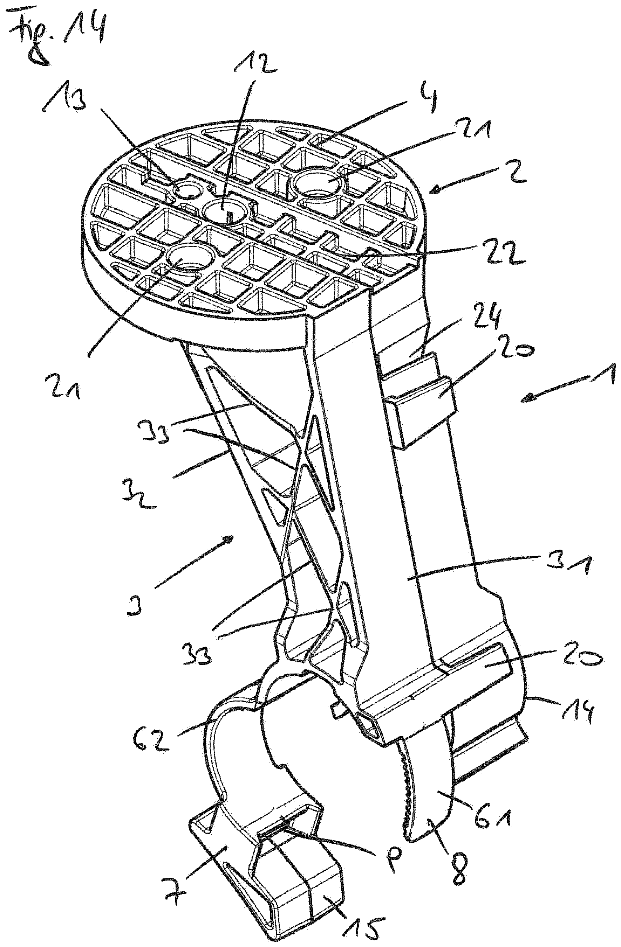

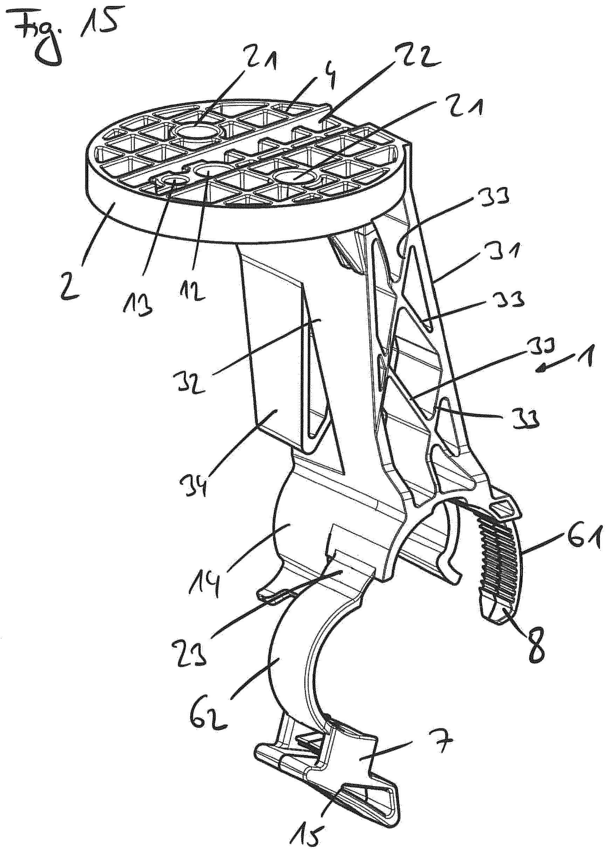

Das vierte Ausführungsbeispiel (vgl. Fig 10 bis 17) unterscheidet sich von den vorherigen Ausführungsbeispielen vor allem durch die unterschiedliche Ausbildung der Befestigungsvorrichtung für das Kabel oder Rohr. Statt eines Bandverschlusses ist beim vierten Ausführungsbeispiel ein Bügelverschluss vorgesehen. Die Befestigungsvorrichtung weist einen ersten Bügel 61 und einen über ein Gelenk 23 gelenkig mit dem Haltefuß 2 (über den Ständer 3) verbundenen zweiten Bügel 62 auf. Das freie Ende des zweiten Bügels 62 trägt die Öffnung 9 des Bügelverschlusses 7 und ist durch Druckausübung auf den zweiten Bügel 62 über das freie Ende 8 des ersten Bügels 61 bewegbar und so durch den Bügelverschluss 7 verriegelbar.

Das freie Ende 8 des ersten Bügels 61 ist hier mit einer Verjüngung ausgebildet, um das Einführen in die Öffnung 9 zu erleichtern. Zum selben Zweck weist die Öffnung 9 des Bügelverschlusses 7 zwei Einführschrägen 91, 92 auf.

Die Druckausübung kann z. B. werkzeuglos durch Anlage einer Hand erfolgen. In diesem Ausführungsbeispiel ist eine Spannhilfe 15 vorgesehen, die einen definierten Angriffspunkt zur Verfügung stellt. Dies kann sowohl von Hand (z. B. mittels eines Daumens) oder über ein Werkzeug (z. B. mit einem definierten Drehmoment) erfolgen.

Natürlich könnte auch mehr als ein Gelenk 23 vorgesehen sein. Das Gelenk 23 könnte in anderer Form, z. B. als Achszapfgelenk, ausgebildet sein.

Der Bügelverschluss 7 kann z. B. so ausgebildet sein, dass am freien Ende 8 des ersten Bügels 61 eine Rasterung angeordnet ist, die mit einer in der Öffnung 9 des Bügelverschlusses angeordneten Rastnase zusammenwirkt. Alternativ könnte auch zumindest ein Loch am ersten Bügel 61 angeordnet sein, in welches ein in der Öffnung 9 des Bügelverschlusses angeordneter Stift eindrückbar ist. Alternativ könnte auch vorgesehen sein, dass das freie Ende 8 des ersten Bügels 61 ohne Rasterung, Loch oder dgl. ausgebildet ist und in der Öffnung 9 des Bügelverschlusses ein begrenzt bewegbares Element (z. B. keil- oder kugelförmig) angeordnet ist, durch welches nach erfolgtem Einbringen des freien Ende 8 des ersten Bügels 61 in die Öffnung 9 ein selbsthemmendes Feststellen erfolgt.

Die Haltevorrichtung 1 ist bevorzugt mit dem Sicherungsband 11 vorkonfektioniert.

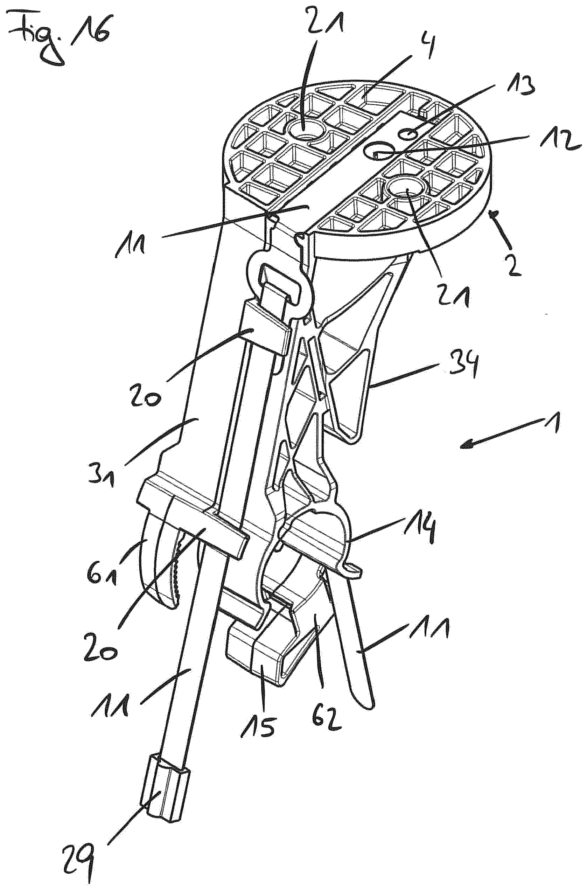

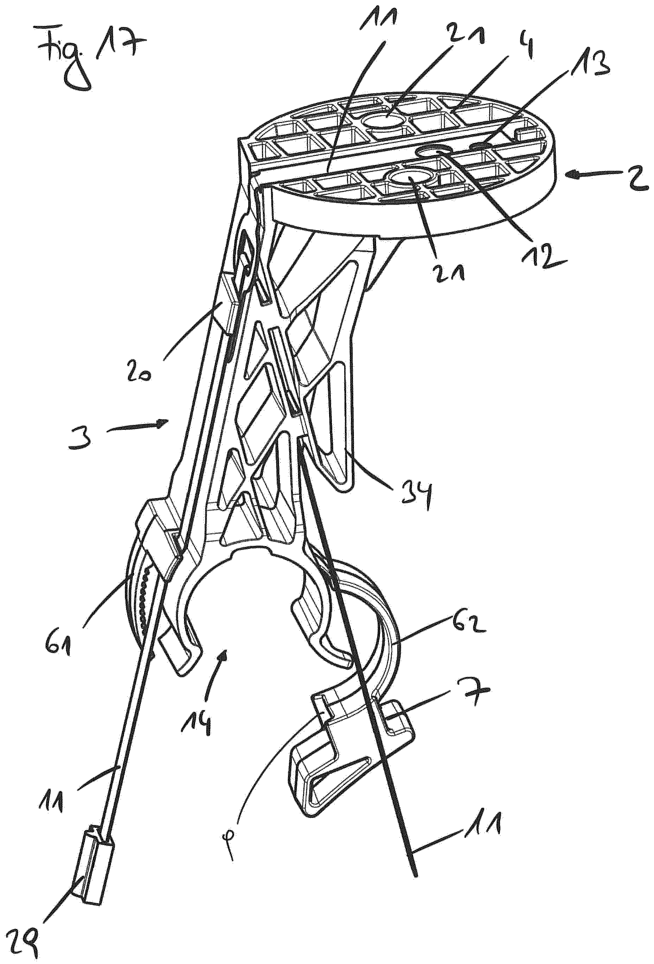

Das Sicherungsband 11 ist in dem in den Figuren 16 und 17 gezeigten Ausführungsbeispiel zweiteilig ausgeführt. Der erste Abschnitt wird im Bereich des Haltefußes 2 angeordnet und ist mit dem zweiten, hier V-förmig ausgebildeten Abschnitt verbunden, der im Bereich des Ständers 3 verläuft. Der erste Abschnitt weist mit den Befestigungsöffnungen 12, 13 des Haltefußes 2 fluchtende Öffnungen auf, damit eine gleichzeitige Befestigung des nicht-brennbaren Sicherungsbandes 11 und des Haltefußes 2 erfolgen kann. Die beiden freien Enden des zweiten Abschnitts (von denen ein Ende mit einem Bandverschluss 29 versehen ist) werden nach dem Anordnen des Kabels oder Rohres miteinander verbunden und würden bei einem Versagen des Bügelverschlusses (z. B. im Brandfall) das Kabel oder Rohr sicher am Untergrund halten.

### Bezugszeichenliste:

- 1: Haltevorrichtung
- 2: Haltefuß
- 3: Ständer
- 31, 32: Längsstreben des Ständers
- 33: Querstreben des Ständers
- 4: Montageseite
- 5: von der Montageseite abgewandte Seite
- 6: Befestigungsband
- 61: erster Bügel des Bügelverschlusses
- 62: zweiter Bügel des Bügelverschlusses
- 7: Bandverschluss
- 8: freies Bandende des Befestigungsbands bzw. ersten Bügels
- 9: Öffnung des Bandverschlusses bzw. Bügelverschlusses
- 91: Einführschräge der Öffnung des Bügelverschlusses
- 92: Einführschräge der Öffnung des Bügelverschlusses
- 10: bügelförmiger Abschnitt des Befestigungsbandes
- 11: nicht-brennbares Sicherungsband
- 12: erste Befestigungsöffnung
- 13: zweite Befestigungsöffnung
- 14: Vorfixierung
- 15: Spannhilfe
- 16: Öffnung der Spannhilfe
- 17: Rampe der Einführhilfe
- 18: Schnabel der Einführhilfe
- 19: Führung für Sicherungsband
- 20: Halteklammern für Sicherungsband
- 21: Aufnahme für Positionierzapfen
- 22: Ausnehmung für Sicherungsband
- 23: Gelenk
- 24: Austrittsöffnung
- 25: Durchtrittsöffnung am Sicherungsband
- 26: Flügel an Befestigungsband oder ersten und zweiten Bügel
- 27: Sicherungslasche
- 28: Befestigungsmittel
- 29: Bandverschluss des Sicherungsbandes
- 30: Positioniernut
- 34: Einführhilfe für Sicherungsband

## Patentansprüche

1. Haltevorrichtung (1) für ein Kabel oder Rohr, mit:
- einem Haltefuß (2) zur Montage der Haltevorrichtung (1) an einem Untergrund, wobei der Haltefuß (2) eine dem Untergrund zuzuwendende Montageseite (4) und eine davon abgewandte Seite (5) aufweist,
- einer Befestigungsvorrichtung zur Befestigung des Kabels oder Rohres am Haltefuß (2),
- einen am Haltefuß (2) angeordneten Ständer (3), welcher die Befestigungsvorrichtung zur Befestigung des Kabels oder Rohres vom Haltefuß (2) in einer Richtung normal auf die von der Montageseite (4) abgewandte Seite (5) beabstandet, wobei der Ständer (3) an einem seitlichen Randbereich des Haltefußes (2) angeordnet ist, so dass die von der Montageseite (4) abgewandte Seite (5) des Haltefußes (2) neben dem Ständer (3) in der Richtung normal auf die von der Montageseite (4) abgewandte Seite (5) auch bei durch die Befestigungsvorrichtung befestigtem Kabel oder Rohr wenigstens teilweise zugänglich ist, **dadurch gekennzeichnet, dass** eine von der Befestigungsvorrichtung verschiedene Vorfixierung (14) für das Kabel oder Rohr vorgesehen ist, wobei die Vorfixierung (14) in einer Axialrichtung des Kabels oder des Rohres, neben der Befestigungsvorrichtung an der vom Haltefuß (2) abgewandten Seite des Ständers (3) angeordnet ist und wobei die Vorfixierung (14) in Form von Federklammern ausgebildet ist, sodass das Kabel oder Rohr zwischen den Federklammern eingeklemmt und so vorpositioniert werden kann.

2. Haltevorrichtung (1) nach Anspruch 1, wobei der Haltefuß (2) plattenförmig ausgebildet ist.

3. Haltevorrichtung (1) nach wenigstens einem der vorangehenden Ansprüche, wobei die Befestigungsvorrichtung ein Befestigungsband (6) und einen Bandverschluss (7) aufweist, wobei ein freies Bandende (8) des Befestigungsbandes (6) in eine Öffnung (9) des Bandverschlusses (7) einführbar ist und wobei vorgesehen ist, dass
- das Befestigungsband (6) einen bügelförmig ausgebildeten und vom Haltefuß (2) abstehenden Abschnitt (10) aufweist
- das freie Bandende (8) durch Druckausübung - vorzugsweise auf den bügelförmig ausgebildeten Abschnitt (10) des Befestigungsbandes (6) - in die Öffnung (9) des Bandverschlusses (7) einführbar und durch den Bandverschluss (7) verriegelbar ist.

4. Haltevorrichtung (1) nach Anspruch 1 oder 2, wobei die Befestigungsvorrichtung zur Befestigung des Kabels oder Rohr am Haltefuß (2) einen ersten Bügel (61) und einen zweiten Bügel (62) aufweist, die durch einen Bügelverschluss (7) miteinander verriegelbar sind, wobei ein freies Ende (8) des ersten Bügels (61) in eine Öffnung (9) des Bügelverschlusses (7) einführbar ist und wobei die Befestigungsvorrichtung weiters ein Gelenk (23) aufweist, welches den zweiten Bügel (62) mit dem Haltefuß (2) verbindet oder im zweiten Bügel (62) angeordnet ist, wobei der zweite Bügel (62) die Öffnung (9) des Bügelverschlusses (7) trägt und die Öffnung (9) des Bügelverschlusses (7) durch Druckausübung auf den zweiten Bügel (62) über das freie Ende (8) des ersten Bügels (61) bewegbar und durch den Bügelverschluss (7) verriegelbar ist.

5. Haltevorrichtung (1) nach Anspruch 3 oder 4, wobei das Befestigungsband (6) bzw. einer der Bügel (61, 62) Flügel (26) für den Ausgleich unterschiedlicher Durchmesser der Kabel oder Rohre aufweist.

6. Haltevorrichtung (1) nach wenigstens einem der beiden vorangehenden Ansprüche, wobei zumindest ein Gelenk (23) vorgesehen ist, welches eine Schwenkachse (S) für eine Schwenkbewegung des bügelförmig ausgebildeten Abschnitts (10) des Befestigungsbandes (6) bildet.

7. Haltevorrichtung nach wenigstens einem der vorangehenden Ansprüche, wobei die Haltevorrichtung (1) eine Vorrichtung zum Anbringen eines zusätzlich zur Befestigungsvorrichtung vorgesehenen, nicht-brennbaren Sicherungsbands (11) für das Kabel oder Rohr an der Haltevorrichtung (1) unabhängig von einer Montage der Haltevorrichtung (1) am Untergrund aufweist.

8. Haltevorrichtung (1) nach dem vorangehenden Anspruch, wobei das Sicherungsband (11) mit sich selbst verbindbar ist, zur Ausbildung einer Schlaufe um ein durch die Befestigungsvorrichtung mit dem Haltefuß (2) verbundenes Rohr oder Kabel.

9. Haltevorrichtung (1) nach dem vorangehenden Anspruch, wobei das Sicherungsband (11) eine Durchtrittsöffnung (25) aufweist, in welche ein freies Ende des Sicherungsbandes (11) einführbar ist, wobei bevorzugt vorgesehen ist, dass das freie Ende des Sicherungsbandes (11) eine klauenförmige Ausbildung aufweist und die Klauen des freien Endes das Sicherungsband (11) im Bereich der Durchtrittsöffnung (25) hintergreifen.

10. Haltevorrichtung (1) nach dem vorangehenden Anspruch, wobei die Durchtrittsöffnung (25) eine Verbreiterung zur Erleichterung des Einführens der Klauen aufweist, wobei sich an die Verbreiterung ein schlitzförmiger Abschnitt anschließt, wobei bevorzugt vorgesehen ist, dass die Verbreiterung durch eine umbiegbare Sicherungslasche (27) verschließbar ist.

11. Haltevorrichtung (1) nach wenigstens einem der vier vorangehenden Ansprüche, wobei das Sicherungsband (11) von Befestigungsmitteln (28), welche die Haltevorrichtung (1) mit einem Untergrund verbinden, galvanisch getrennt ist.

12. Haltevorrichtung (1) nach wenigstens einem der vorangehenden Ansprüche, wobei der Ständer (3) nach Art eines Fachwerkes ausgebildet ist.

13. Haltevorrichtung (1) nach wenigstens einem der vorangehenden Ansprüche, wobei die Haltevorrichtung - abgesehen vom ggf. vorhandenen nicht-brennbaren Sicherungsband (11) und Befestigungsmittel (28) - einstückig ausgebildet ist.

14. Haltevorrichtung (1) nach wenigstens einem der vorangehenden Ansprüche, wobei die Federklammern der Vorfixierung (14) paarweise angeordnet sind.

15. Haltevorrichtung nach dem vorangehenden Anspruch, wobei zumindest eine Federklammer des Federklammernpaars der Vorfixierung (14) mittels einer Querschnittsschwächung federnd ausgebildet ist.

## Claims

1. Holding device (1) for a cable or pipe, comprising:
- a holding foot (2) for mounting the holding device (1) to a ground, wherein the holding foot (2) has a mounting side (4) facing the ground, and a side (5) facing away from the mounting side
- a fastening device for fastening the cable or pipe to the holding foot (2)
- a stand (3) which is arranged on the holding foot (2), and which distances the fastening device for fastening the cable or pipe from the holding foot (2) in a direction normal to the side (5) facing away from the mounting side (4)
wherein the stand (3) is arranged on a lateral edge area of the holding foot (2), so that the side (5) facing away from the mounting side (4) of the holding foot (2) next to the stand (3) in the direction normal to the side (5) facing away from the mounting side (4) is at least partially accessible even when the cable or pipe is fastened by the fastening device, **characterised in that** a pre-fixing (14), which is different from the fastening device, is provided for the cable or pipe, wherein the pre-fixing (14) is arranged in an axial direction of the cable or pipe next to the fastening device on the side of the stand (3) facing away from the holding foot (2), and wherein the pre-fixing (14) is designed in the form of spring clamps so that the cable or pipe can be clamped between the spring clamps, and thus can be pre-positioned.

2. Holding device (1) according to claim 1, wherein the holding foot (2) is plate-shaped.

3. Holding device (1) according to at least one of the preceding claims, wherein the fastening device has a fastening strap (6) and a strap fastener (7), wherein a free strap end (8) of the fastening strap (6) is insertable into an opening (9) of the strap fastener (7), and wherein it is provided that
- the fastening strap (6) has a section (10) which is of bracket-shaped design facing away from the holding foot (2)
- the free strap end (8) is insertable into the opening (9) of the strap fastener (7) by exerting pressure - preferably on the bracket-shaped designed section (10) of the fastening strap (6) - and is lockable by the strap fastener (7).

4. Holding device (1) according to claim 1 or 2, wherein the fastening device for fastening the cable or pipe to the holding foot (2) has a first bracket (61) and a second bracket (62), which are lockable with one another by a bracket fastener (7), wherein a free end (8) of the first bracket (61) is insertable into an opening (9) of the bracket fastener (7), and wherein the fastening device further has a joint (23), which connects the second bracket (62) to the holding foot (2) or is arranged in the second bracket (62), wherein the second bracket (62) carries the opening (9) of the bracket fastener (7), and the opening (9) of the bracket fastener (7) is movable over the free end (8) of the first bracket (61) by exerting pressure on the second bracket (62), and is lockable by the bracket fastener (7).

5. Holding device (1) according to claim 3 or 4, wherein the fastening strap (6) or one of the brackets (61, 62) has flaps (26) for the adjustment of different diameters of the cables or pipes.

6. Holding device (1) according to at least one of the two preceding claims, wherein at least one joint (23) is provided, which forms a pivot axis (S) for a pivoting movement of the bracket-shaped designed section (10) of the fastening strap (6).

7. Holding device according to at least one of the preceding claims, wherein the holding device (1) has a device for attaching a, in addition to the fastening device provided, non-combustible safety strap (11) for the cable or pipe to the holding device (1), independent of mounting the holding device (1) to the ground.

8. Holding device (1) according to the preceding claim, wherein the safety strap (11) is connectable to itself, for forming a loop around a pipe or cable connected to the holding foot (2) by the fastening device.

9. Holding device (1) according to the preceding claim, wherein the safety strap (11) has a passage opening (25) into which a free end of the safety strap (11) is insertable, wherein it is preferably provided that the free end of the safety strap (11) has a claw-shaped design, and the claws of the free end reach behind the safety strap (11) in the area of the passage opening (25).

10. Holding device (1) according to the preceding claim, wherein the passage opening (25) comprises a widening for facilitating the insertion of the claws, wherein the widening is followed by a slit-shaped section, wherein it is preferably provided that the widening is closable by a bendable safety lug (27).

11. Holding device (1) according to at least one of the four preceding claims, wherein the safety strap (11) is galvanically separated from fastening means (28), which connect the holding device (1) to a ground.

12. Holding device (1) according to at least one of the preceding claims, wherein the stand (3) is designed in the form of a truss.

13. Holding device (1) according to at least one of the preceding claims, wherein the holding device - apart from the possibly present non-combustible safety strap (11) and fastening means (28) - is designed as a single piece.

14. Holding device (1) according to at least one of the preceding claims, wherein the spring clamps of the pre-fixing (14) are arranged pairwise.

15. Holding device according to the preceding claim, wherein at least one spring clamp of the spring clamp pair of the pre-fixing (14) is designed to be springloaded by means of a cross-sectional weakening.

## Revendications

1. Dispositif de maintien (1) pour un câble ou un tuyau, avec :
- un pied de maintien (2) pour le montage du dispositif de maintien (1) sur un fond, dans lequel le pied de maintien (2) présente un côté de montage (4) à tourner vers le fond et un côté opposé à celui-ci,
- un dispositif de fixation pour la fixation du câble ou du tuyau au pied de maintien (2),
- un montant (3) disposé sur le pied de maintien (2), lequel espace le dispositif de fixation, destiné à la fixation du câble ou du tuyau, du pied de maintien (2), dans un sens perpendiculaire au côté (5) opposé au côté de montage (4),
dans lequel le montant (3) est disposé sur une zone marginale latérale du pied de maintien (2), de sorte que le côté (5), opposé au côté de montage (4), du pied de maintien (2) est au moins partiellement accessible à côté du montant (3) dans le sens perpendiculaire au côté (5) opposé au côté de montage (4), même avec le câble ou le tuyau fixé par le dispositif de fixation, **caractérisé en ce qu'**une préfixation (14) différente du dispositif de fixation est prévue pour le câble ou le tuyau, dans lequel la préfixation (14) est disposée dans un sens axial du câble ou du tuyau à côté du dispositif de fixation sur le côté, opposé au pied de maintien (2), du montant (3) et dans lequel la préfixation (14) est conçue en forme de pinces à ressort de sorte que le câble ou le tuyau peut être pincé entre les pinces à ressort et être ainsi prépositionné.

2. Dispositif de maintien (1) selon la revendication 1, dans lequel le pied de maintien (2) est conçu en forme de plaque.

3. Dispositif de maintien (1) selon au moins l'une des revendications précédentes, dans lequel le dispositif de fixation présente une bande de fixation (6) et une fermeture de bande (7), dans lequel une extrémité de bande libre (8) de la bande de fixation (6) peut être introduite dans une ouverture (9) de la fermeture de bande (7) et dans lequel il est prévu, que
- la bande de fixation (6) présente une section (10) conçue en forme d'étrier et faisant saillie du pied de maintien (2)
- l'extrémité de bande libre (8) peut être introduite en exerçant une pression - de préférence sur la section (10) conçue en forme d'étrier de la bande de fixation (6) - dans l'ouverture (9) de la fermeture de bande (7) et peut être verrouillée par la fermeture de bande (7).

4. Dispositif de maintien (1) selon la revendication 1 ou 2, dans lequel le dispositif de fixation destiné à la fixation du câble ou du tuyau au pied de maintien (2) présente un premier étrier (61) et un deuxième étrier (62), qui peuvent être verrouillés ensemble par une fermeture d'étrier (7), dans lequel une extrémité libre (8) du premier étrier (61) peut être introduite dans une ouverture (9) de la fermeture d'étrier (7) et dans lequel le dispositif de fixation présente en outre une articulation (23), laquelle relie le deuxième étrier (62) au pied de maintien (2) ou est disposée dans le deuxième étrier (62), dans lequel le deuxième étrier (62) porte l'ouverture (9) de la fermeture d'étrier (7) et l'ouverture (9) de la fermeture d'étrier (7) peut être déplacée en exerçant une pression sur le deuxième étrier (62) par-dessus l'extrémité libre (8) du premier étrier (61) et peut être verrouillée par la fermeture d'étrier (7).

5. Dispositif de maintien (1) selon la revendication 3 ou 4, dans lequel la bande de fixation (6) ou l'un des étriers (61, 62) présente des ailettes (26) pour compenser les différents diamètres des câbles ou des tuyaux.

6. Dispositif de maintien (1) selon au moins l'une des deux revendications précédentes, dans lequel au moins une articulation (23) est prévue, laquelle forme un axe de pivotement (S) pour un mouvement de pivotement de la section (10) conçue en forme d'étrier de la bande de fixation (6).

7. Dispositif de maintien (1) selon au moins l'une des revendications précédentes, dans lequel le dispositif de maintien (1) présente un dispositif pour l'agencement d'une bande de sécurité non inflammable (11), prévue en plus du dispositif de fixation, pour le câble ou le tuyau sur le dispositif de maintien (1) indépendamment d'un montage du dispositif de maintien (1) sur le fond.

8. Dispositif de maintien (1) selon la revendication précédente, dans lequel la bande de sécurité (11) peut être reliée à elle-même pour former une boucle autour d'un tuyau ou d'un câble relié au pied de maintien (2) par le dispositif de fixation.

9. Dispositif de maintien (1) selon la revendication précédente, dans lequel la bande de sécurité (11) présente une ouverture de passage (25), dans laquelle une extrémité libre de la bande de sécurité (11) peut être introduite, dans lequel il est prévu de préférence que l'extrémité libre de la bande de sécurité (11) présente une configuration en forme de griffe et que les griffes de l'extrémité libre saisissent par l'arrière la bande de sécurité (11) dans la zone de l'ouverture de passage (25).

10. Dispositif de maintien (1) selon la revendication précédente, dans lequel l'ouverture de passage (25) présente un élargissement pour faciliter l'introduction des griffes, dans lequel se raccorde à l'élargissement une section en forme de fente, dans lequel il est prévu de préférence que l'élargissement puisse être obturé par un collier de sécurité flexible (27).

11. Dispositif de maintien (1) selon au moins l'une des quatre revendications précédentes, dans lequel la bande de sécurité (11) est séparée galvaniquement des moyens de fixation (28), lesquels relient le dispositif de maintien (1) à un fond.

12. Dispositif de maintien (1) selon au moins l'une des revendications précédentes, dans lequel le montant (3) est conçu à la manière d'un treillis.

13. Dispositif de maintien (1) selon au moins l'une des revendications précédentes, dans lequel le dispositif de maintien - à l'exception de la bande de sécurité (11) non inflammable, éventuellement présente, et des moyens de fixation (28) est conçu d'une seule pièce.

14. Dispositif de maintien (1) selon au moins l'une des revendications précédentes, dans lequel les pinces à ressort de la préfixation (14) sont disposées par paires.

15. Dispositif de maintien selon la revendication précédentes, dans lequel au moins une pince à ressort de la paire de pinces à ressort de la préfixation (14) est conçue de façon élastique au moyen d'un affaiblissement transversal.
